# EUROPÄISCHE PATENTSCHRIFT

(11) **EP 2 487 474 B1**
(45) Veröffentlichungstag und Bekanntmachung des Hinweises auf die Patenterteilung: **01.05.2019**
(21) Anmeldenummer: 12155008.1
(22) Anmeldetag: 10.02.2012
(51) Int. Cl.: G01G 17/08, G01G 21/22

(54) **Plattformwaage**
Platform scale
Balance de plateforme

(30) Priorität: 11.02.2011 DE 102011000682
(43) Veröffentlichungstag der Anmeldung: 15.08.2012
(60) Teilanmeldung: 19157882.2
(73) Patentinhaber: Janner, Siegfried, 92708 Mantel (DE)
(72) Erfinder: Janner, Siegfried, 92708 Mantel (DE)
(74) Vertreter: Lang, Christian

(56) Entgegenhaltungen:
- DE-U1- 9 105 992
- US-A- 3 935 913
- US-A1- 2006 219 445
- US-A1- 2011 155 476

## Beschreibung

### GEBIET DER ERFINDUNG

Die vorliegende Erfindung betrifft eine Plattformwaage nach dem Oberbegriff des Anspruchs 1 bzw. ein Verfahren zu deren Herstellung nach dem Oberbegriff des Anspruchs 9.

### STAND DER TECHNIK

Plattformwaagen zum Wiegen unterschiedlichster Güter sind aus dem Stand der Technik bereits bekannt. Diese Waagen sind üblicherweise so aufgebaut, dass eine möglichst steife Plattform auf einer entsprechenden Lagereinrichtung gelagert ist, die üblicherweise Wägezellen, insbesondere in Form von elektronischen Wägezellen umfasst, sodass bei einer Auflage von zu wiegenden Gütern auf der Plattform die Gewichtskraft der zu wiegenden Güter über die Plattform auf die Lagereinrichtung mit den Wägezellen übertragen wird, sodass die Wägezellen das Gewicht der zu wiegenden Gütern bestimmen können.

Hierbei ist es wichtig, dass die Plattform steif ausgebildet ist und durch Vermeidung von Verformungen z. B. in Form von Verbiegungen oder Verwindungen, eine Beeinflussung des Messergebnisses verhindert wird. Entsprechend ist es bekannt, derartige Plattformen massiv auszubilden, wobei sowohl massive Auflageplatten zur Aufnahme der zu wiegenden Güter als auch massive Versteifungsstreben eingesetzt werden. Durch die Verwendung von massiven Auflageplatten mit einer hohen Materialdicke oder von massiven Versteifungsstreben, beispielsweise in Form von Doppel-T-förmigen Stahlträgern kann zwar die gewünschte Festigkeit und Stabilität erzielt werden, jedoch ist ein hoher Materialeinsatz erforderlich und das Gewicht der Plattformwaage wird sehr hoch.

Die Dokumente US 3 935 913 A, US 2006/219445 A1 und DE 91 05 992 U1 offenbaren Plattformwaagen mit einer Plattform, die eine Aufnahmefläche zur Aufnahme des Wiegegutes sowie Wägezellen zur Ermittlung des Gewichts des Wiegegutes aufweisen. Allerdings sind die bekannten Plattformwaagen noch nicht hinsichtlich ihrer Eigenschaften und einer einfachen Herstellbarkeit optimiert.

### OFFENBARUNG DER ERFINDUNG

### AUFGABE DER ERFINDUNG

Es ist deshalb Aufgabe der Erfindung eine Plattformwaage zu schaffen, bei der sowohl die erforderliche Formfestigkeit und Stabilität der Plattform gewährleistet ist, jedoch gleichzeitig der Materialeinsatz und das Gewicht reduziert werden. Darüber hinaus soll eine entsprechende Plattformwaage einfach herstellbar sein.

### TECHNISCHE LÖSUNG

Diese Aufgabe wird gelöst durch eine Plattformwaage mit den Merkmalen des Anspruchs 1 sowie ein Verfahren zur Herstellung einer Plattformwaage mit den Merkmalen des Anspruchs 9 und ein System mit den Merkmalen des Anspruchs 13. Vorteilhafte Ausgestaltungen sind Gegenstand der abhängigen Ansprüche.

Gemäß der vorliegenden Erfindung wird eine Gewichtsreduzierung und eine Verringerung des Materialeinsatzes bei gleichbleibender Steifigkeit der Plattform einer Plattformwaage dadurch erreicht, dass eine Rahmenkonstruktion zur Versteifung vorgesehen ist, welche Versteifungsstreben aufweist, die durch ein Kantprofil gebildet sind, welches durch mehrere Kantungen eines Blechs hergestellt ist. Statt eines doppel-T-förmigen Stahlträgers wird somit ein Kantprofil aus einem Metallblech, insbesondere Stahl- oder Aluminiumblech eingesetzt, welches seine Steifigkeit durch die entsprechende Querschnittform erhält. Dadurch kann Material eingespart und das Gewicht der Plattform einer Plattformwaage reduziert werden, wobei gleichzeitig die Steifigkeit der Plattform erhalten bleibt.

Zusätzlich kann bei einem Kantprofil mit mindestens einer Kantung mindestens eine Randkante vorgesehen sein, die zur Kantung parallele und nicht-parallele Abschnitte und/oder Abschnitte mit zur Kantung parallelen und nicht-parallelen Anteilen, also z.B. schräg oder gekrümmt zur Kantung verlaufende Abschnitte, aufweist. Durch das Vorsehen eines Kantprofils ist es nämlich möglich, sehr individuelle Versteifungsstreben in einfacher Weise herzustellen, bei denen geeignete Aussparungen, Ausnehmungen, Bohrungen, Einschnitte, schräg verlaufende Randbereiche, gekrümmte Randbereiche und dergleichen vorgesehen sind. Diese können in einfacher Weise, beispielsweise durch Laserschneiden, in ein Blech eingebracht werden, welches anschließend zur Versteifungsstrebe gekantet wird. Dadurch lassen sich sehr komplexe Geometrien von Versteifungsstreben in einfacher Weise herstellen. Entsprechend kann für das Verfahren zur Herstellung einer Versteifungsstrebe zur Aussteifung von Plattformen einer Plattformwaage
ein Ausgangsblech verwendet werden, welches sich von einem quadratischen oder rechteckigen Blech bzw. quaderförmigen Blech unterscheidet. Vielmehr wird nach dem erfindungsgemäßen Verfahren zur Herstellung einer Plattformwaage die Versteifungsstrebe dafür so hergestellt, dass ein Blech in beliebiger Plattenform, also beliebiger Form der Hauptfläche, die durch die beiden größten Dimensionen der Platte aufgespannt wird, nach Bedarf geschnitten und anschließend zu einer Versteifungsstrebe gekantet wird.

Insbesondere weist die Rahmenkonstruktion zur Versteifung der Plattform mehrere Versteifungsstreben auf, die entweder im Bereich des Randes der Plattform als Längs- und/oder Querstreben angeordnet sein können und/oder als Versteifungsstreben quer über die Aufnahmefläche der Plattform verlaufen können Erfindungsgemäß bilden mehrere der Versteifungsstreben ein Kreuz.

Darüber hinaus kann auch eine Auflageplatte, die die Auflagefläche für die zu wiegenden Güter bildet, in den Randbereichen als Versteifungsstrebe ausgebildet sein, sodass die Versteifungsstreben in die Auflageplatte integriert sind.

Darüber hinaus können die Versteifungsstreben so ausgebildet sein, dass sie einen oder mehrere Bereiche zum Anordnen einer Auflageplatte aufweisen, wie beispielsweise eine ausgebildete Schulter in der Versteifungsstrebe. Erfindungsgemäß weisen die Versteifungsstreben Ausnehmungen zum gegenseitigen Ineinandergreifen auf. Die Ausnehmungen können auch zur Aufnahme von weiteren Komponenten dienen, wie beispielsweise zur Aufnahme von Lagereinrichtungen oder von Aufbauten auf der Plattform. Die Versteifungsstreben können im Querschnitt unterschiedliche Profilformen aufweisen, wobei insbesondere Profilformen bevorzugt sind, die mindestens vier Kantungen, vorzugsweise fünf oder mehr Kantungen aufweisen, da dadurch die Biege- und Verwindungssteifigkeit der Versteifungsstreben besonders erhöht werden kann.

So können die Versteifungsstreben im Querschnitt eine Form aufweisen, die die Form eines Omegas hat, die den Umfang eines L beschreibt oder die Form eines C oder eines an einer Seite nicht vollständig geschlossenen Rechtecks aufweist.

Die Plattformwaage kann modulartig aus den verschiedenen Komponenten aufgebaut werden, wie Versteifungsstreben, Auflageplatte, Lagereinrichtung etc. Dadurch ist die Herstellung von verschiedensten Plattform, insbesondere von Plattformwaagen mit unterschiedlichen Dimensionen in einfacher Weise möglich, wobei teilweise identische Komponenten im Sinne eines Baukastenprinzips eingesetzt werden können. Die unterschiedlichen Komponenten, wie Versteifungsstreben und Auflageplatte können mittels stoffschlüssiger Verbindung, insbesondere Schweißen und vorzugsweise Punktschweißen miteinander verbunden werden, wobei Ausnehmungen, Öffnungen und dergleichen oder andere Schnitte in der Plattform, insbesondere in den Versteifungsstreben und der Auflageplatte mittels Laserschneiden eingebracht werden können.

Nach einem weiteren Aspekt der vorliegenden Erfindung, für den selbstständig und in Kombination mit den anderen Aspekten der vorliegenden Erfindung Schutz begehrt wird, wird ein Baukastensystem zur Herstellung einer Plattformwaage vorgeschlagen, bei dem neben anderen Komponenten wie Wägezellen, Auflageplatten und dergleichen, mindestens mehrere unterschiedliche Versteifungsstreben enthalten sind, die gemäß den Versteifungsstreben der Plattformwaage bzw. des Herstellungsverfahrens zur Herstellung einer Plattformwaage nach der vorliegenden Beschreibung ausgebildet sind. Die unterschiedlichen Versteifungsstreben sind so ausgebildet, dass sie zur Bildung einer Plattform für eine Plattformwaage kombiniert werden können, so dass die Plattformwaagen in einfacher Weise durch Kombination entsprechender Systemkomponenten hergestellt werden können.

Die Versteifungsstreben können sich in der Form und/oder der Dimension unterscheiden, so dass insbesondere unterschiedlich große Plattformwaagen aus ansonsten gleichartigen Versteifungsstreben hergestellt werden können.

Die Plattformwaagen können Dimensionen mit Plattformen in der Größenordnung von 0,5 m² und mehr, insbesondere 1 m² und mehr, vorzugsweise 5 m² und mehr Plattformfläche aufweisen.

### KURZE BESCHREIBUNG DER ZEICHNUNGEN

Die beigefügten Zeichnungen zeigen in rein schematischer Weise in
- Fig. 1: eine perspektivische Ansicht einer Plattformwaage von unten;
- Fig. 2: eine Draufsicht auf eine Versteifungsstrebe;
- Fig. 3: einen Querschnitt durch die Versteifungsstrebe aus Fig. 2;
- Fig. 4: eine Seitenansicht der Versteifungsstrebe aus Fig. 2;
- Fig. 5: ein weiteres Ausführungsbeispiel einer Versteifungsstrebe in der Draufsicht ähnlich der Fig. 2;
- Fig. 6: eine perspektivische Darstellung einer weiteren Ausführungsform einer Versteifungsstrebe;
- Fig. 7: eine perspektivische Darstellung einer Plattform einer erfindungsgemäßen Plattformwaage mit Versteifungsstreben gemäß Fig. 6;
- Fig. 8: eine perspektivische Ansicht einer weiteren Ausführungsform einer Plattformwaage mit einer Plattform, wie in Fig. 7 dargestellt; und in
- Fig. 9: ein Ausgangsblech für die Herstellung einer Versteifungsstrebe.

### AUSFÜHRUNGSBEISPIELE

Weitere Vorteile, Kennzeichen und Merkmale der vorliegenden Erfindung werden bei der nachfolgend detaillierten Darstellung der Ausführungsbeispiele anhand der beigefügten Zeichnungen deutlich.

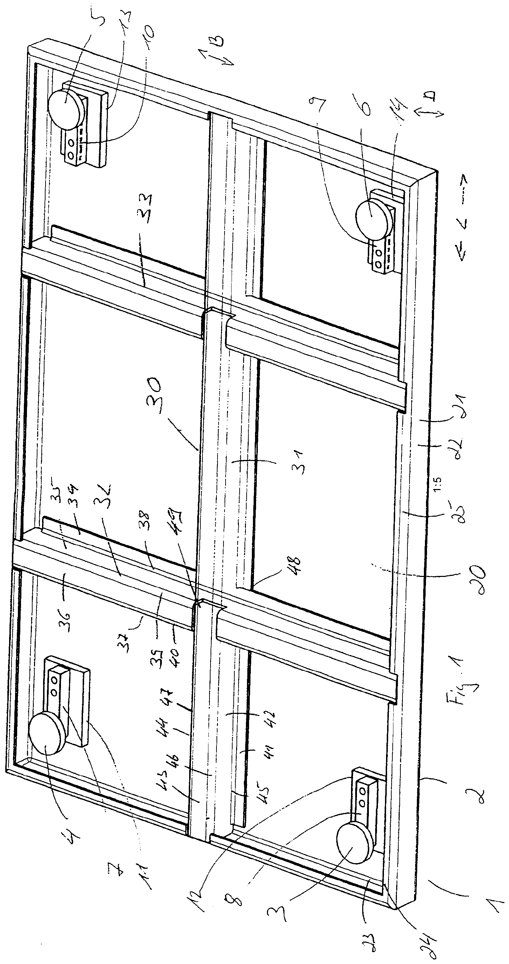

Die Fig. 1 zeigt in einer perspektivischen Darstellung von der Unterseite eine Plattformwaage 1 mit einer Platteform 2, die über vier Lagerblöcke 11, 12, 13, 14, die in den Eckbereichen der rechteckigen Plattform 2 angeordnet sind, und über entsprechende Wägezellen 7, 8, 9, 10 auf Füßen 3, 4, 5, 6 gelagert ist.

Die Plattform 2 umfasst eine Auflageplatte 20, auf der in der Fig. 1 nicht zu sehenden Oberseite, die zu wiegenden Güter gelagert werden können, sodass durch die auf die Plattform 2 bzw. die Auflageplatte 20 einwirkende Gewichtskraft über die Lagereinrichtung mit Lagerblöcken 11, 12, 13, 14, Wägezellen 7, 8, 9, 10 und die Füße 3, 4, 5, 6, abgeleitet wird, sodass die Wägezellen 7, 8, 9, 10 entsprechende Messwerte ermitteln können, die über eine nicht näher dargestellte Auswerteeinheit in eine entsprechende Gewichtsangabe für das gewogene Gut umgerechnet werden können. Über eine Anzeigeeinheit, die ebenfalls nicht dargestellt ist, kann das ermittelte Gewicht ausgegeben werden.

Da die elektronischen Wägezellen 7, 8, 9, 10 die Messwerte auf Grund elastischer Verformungen entsprechender Teile der Wägezellen 7, 8, 9, 10 ermitteln und die verschiedenen Messwerte der Wägezellen 7, 8, 9, 10 miteinander kombiniert werden müssen, ist es erforderlich, dass die Plattform 2 an sich möglichst steif ausgebildet ist, da zu große Verformungen der Plattform 2 das Messergebnis der Plattformwaage 1 verfälschen können. Entsprechend weist die Plattform 2 erfindungsgemäß eine steife Konstruktion auf, die diesen Anforderungen Rechnung trägt.

Die Plattform 2 umfasst eine Auflageplatte 20 und eine Rahmenkonstruktion 30, die über eine stoffschlüssige Verbindung, beispielsweise durch Schweißen, insbesondere Punktschweißen miteinander verbunden sind.

Die Auflageplatte 20 weist eine Länge L auf, deren Richtung durch den Großbuchstaben L mit dem Doppelpfeil gekennzeichnet ist. Darüber hinaus lässt sich eine Breite B definieren, die bei der gezeigten Ausführungsform der Fig. 1 auf Grund der quaderförmigen bzw. rechteckförmigen Grundgestalt der Plattform 2 senkrecht zur Längserstreckung L orientiert ist. Wiederum senkrecht zur Längserstreckung L und zur Breite B ist die Dicke D der quaderförmigen Plattform 2 definiert. Durch die Länge L und die Breite B ist die Auflagefläche an der Oberseite der Aufnahmeplatte 20 definiert, welche gleichzeitig die Aufnahmeebene darstellt. Bei Plattformwaagen mit andersartiger Grundform, also Grundformen, die von der rechteckigen Form abweichen, kann die Auflagefläche bzw. die Auflageebene in ähnlicher Weise durch die maximale Längserstreckung und die maximale Breitenerstreckung definiert werden, welche eine sogenannte Hauptfläche der Plattform 2 bestimmen, die durch die maximalen Dimensionen in unabhängigen Raumrichtungen definiert wird und entsprechend die Auflagefläche darstellt.

Die Auflageplatte 20 weist einen umlaufenden Rand 21 auf, der eine senkrecht zur Auflagefläche bzw. Hauptfläche der Plattform 2 verlaufenden Wandbereich 22 mit einem am anderen Ende wiederum parallel zur Auflagefläche verlaufenden Wandbereich 24 umfasst. Die Wandbereiche 22 und 24 sind durch Biegen der Auflageplatte 20 um jeweils 90 °C, also der Wandbereich 21 durch Biegen um einmal 90 °C und der Wandbereich 24 durch Biegen um zweimal 90 °C aus der ebenen Auflageplatte 20 gebildet worden, wobei an den Eckbereichen entsprechende Ausschnitte vorgesehen worden sind, um Überlappungen zu vermeiden. Die Auflagefläche und der senkrecht dazu angeordnete Wandbereich 22 sind durch einen Kantbereich 23 und der Wandbereich 22 mit dem Wandbereich 24 durch einen Kantbereich 25 miteinander verbunden. Durch den abgekanteten Rand 21, welcher im Querschnitt die Form eines C aufweist, wird eine stabile Randkonstruktion geschaffen, die der Auflageplatte 20 eine große Stabilität verleiht.

Um die Stabilität und Festigkeit der Auflageplatte 20 weiterhin zu erhöhen ist an der Unterseite gegenüberliegend der Auflagefläche der Auflageplatte 20 eine Rahmenkonstruktion 30 mit drei Versteifungsstreben 31, 32 und 33 vorgesehen, die als Doppelkreuz ausgebildet ist.

Die Versteifungsstreben 31, 32, 33 bilden im Querschnitt die Form eines Omega (Ω), wobei die äußeren Schenkel des Omega, von denen bei der Versteifungsstrebe 32 lediglich der Schenkel 34 zu sehen ist und bei der Versteifungsstrebe 31 der Schenkel 44, an der Unterseite der Auflageplatte 20 anliegen und mit der Auflageplatte 20 über eine stoffschlüssige Verbindung, beispielsweise in Form einer Verschweißung, z. B. über Punktschweißungen, verbunden sind.

Neben den äußeren Schenkeln der omegaförmigen Querschnittsform der Versteifungsstreben 31, 32 und 33, die an der Auflageplatte 20 angeordnet sind, weisen die Versteifungsstreben 32, 31 und 33 senkrecht zur Auflagefläche angeordnete Wandbereiche 35, 37 bzw. 42, 44 auf, sowie parallel zur Auflagefläche verlaufende Wandbereiche 36 bzw. 43. Die jeweils senkrecht zueinander angeordneten Schenkel bzw. Wandbereiche 34, 35, 36, 37 bzw. 41, 42, 43, 44 sind über Kantbereiche 38, 39, 40 bzw. 45, 46 und 47 miteinander verbunden, mittels denen die 90°-Krümmung erzielt wird. Die Kantbereiche 38, 39, 40 bzw. 45, 46, 47 werden durch 90°-Abkantungen aus einem ebenen Blech erzeugt. Durch die omega-förmige Querschnittsstruktur der Versteifungsstreben 31, 32, 33 kann bei geringem Materialeinsatz eine hohe Steifigkeit, insbesondere Biegesteifigkeit und Verwindungssteifigkeit erzielt werden.

Im Kreuzungsbereich der Verbindungsstreben 31, 32, 33 sind entsprechende Aussparungen 48 und 49 in den Verbindungsstreben 31, 32 vorgesehen, sodass eine kreuzförmige Anordnung der Versteifungsstreben 31, 32 und 33 möglich ist.

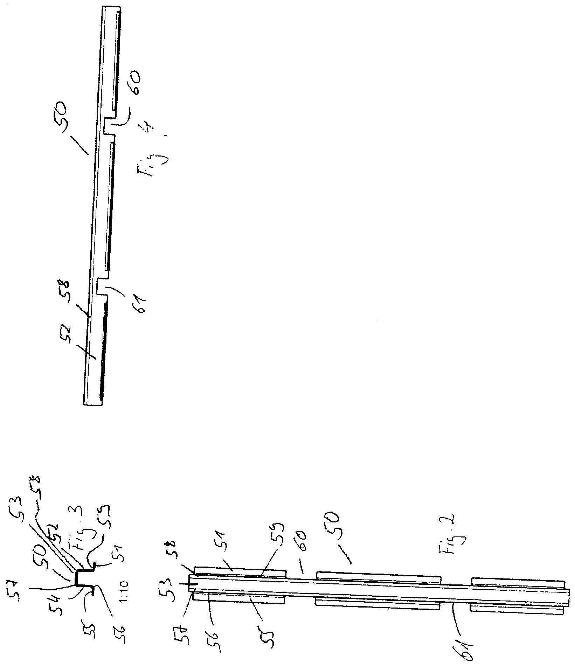

Die Figuren 2 bis 4 zeigen eine Versteifungsstrebe 50 ähnlich der Versteifungsstrebe 31 aus Fig. 1. Wie sich aus Fig. 3 ergibt weist die Versteifungsstrebe 50 ebenfalls einen Omegaform auf, wobei die äußeren Flanken 51 und 55 zur Anordnung auf der Unterseite einer Auflageplatte vorgesehen sind, während die Wandbereiche 52 und 54 im Wesentlichen senkrecht von den äußeren Flanken 51 und 55 hervorstehen und über die Kantbereiche 59 und 56 mit den äußeren Flanken 51 und 55 verbunden sind. Die beiden Wandbereiche 52 und 54 sind wiederum über einen parallel zu den äußeren Flanken 51 und 55 angeordneten Wandbereich 53 verbunden, wobei zwischen dem Wandbereich 52 und dem Wandbereich 53 ein Kantbereich 58 vorgesehen ist, während zwischen dem Wandbereich 53 und dem Wandbereich 54 der Kantbereich 57 angeordnet ist.

In der Seitendarstellung der Fig. 4 sind die Ausnehmungen 61 und 60 zu erkennen, die sich im Wesentlichen in den Wandbereichen 52 und 54 sowie den äußeren Flanken 51 und 55 befinden und dazu dienen quer angeordnete Versteifungsstreben aufzunehmen, wie im Ausführungsbeispiel der Fig. 1 gezeigt.

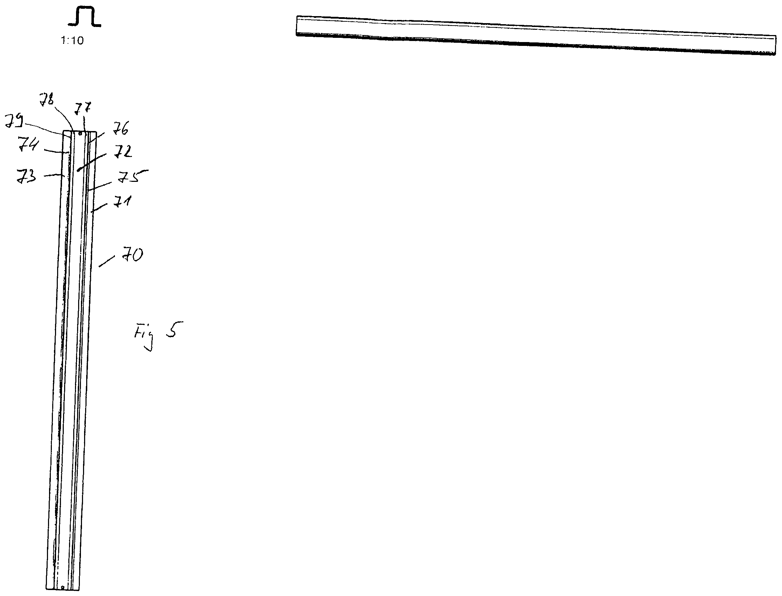

Die Fig. 5 zeigt eine weitere Versteifungsstrebe 70 ähnlich der Ausführungsform der Figuren 2 bis 4 jedoch ohne entsprechende Ausnehmungen. Die Querschnittsform ist wiederum omega-förmig, mit äußeren Flanken 71 und 73, senkrecht dazu angeordneten Wandbereichen 75 und 74 sowie einem dazwischen angeordneten verbindenden Wandbereich 72. Dazwischen sind wiederum entsprechende Kantbereiche 76, 77, 78 und 79, die durch eine entsprechende Abkantung eines ebenen Blechs in die gezeigte Profilform der Versteifungsstrebe 70 entstehen.

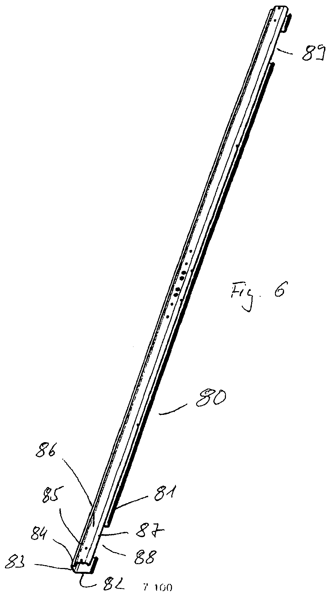

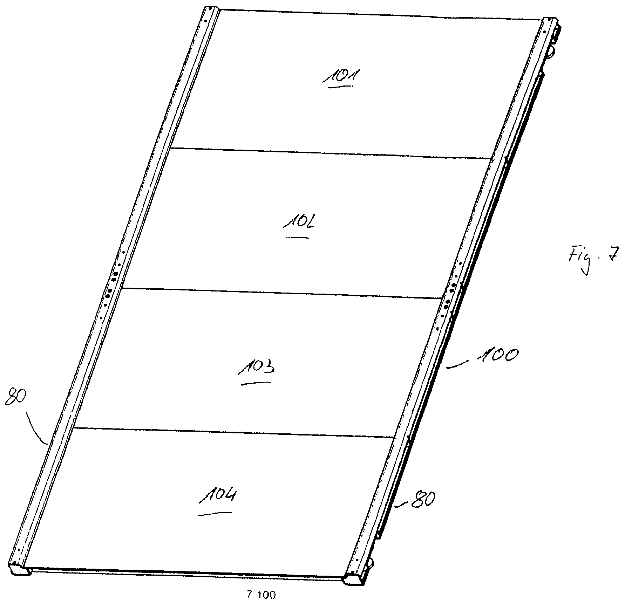

Die Fig. 6 zeigt eine weitere Ausführungsform einer Versteifungsstrebe, die im Querschnitt die Form des äußeren Umfangs eines L aufweist, wobei die Versteifungsstrebe 80 insgesamt 7 Wandbereiche 81 bis 87 aufweist. Beginnend mit dem Wandbereich 81 schließen sich jeweils um 90° in Uhrzeigerrichtung abgebogene Wandbereiche 82, 82 und 84 an. Während der Wandbereich 85 gegenüber dem Wandbereich 84 entgegen dem Uhrzeigersinn um 90° gedreht ist und die Wandbereich 86 und 87 wiederum um 90° jeweils gedreht gegenüber dem vorausgehenden Wandbereich im Uhrzeigersinn angeordnet sind. Durch die Wandbereiche 85 und 85 ist eine Schulter ausgebildet, in welcher eine Auflageplatte angeordnet werden kann, wie nachfolgend in Fig. 7 dargestellt.

In Fig. 6 ist bei der dort dargestellten Versteifungsstrebe 80 weiterhin zur erkennen, dass Ausnehmungen 88 und 89 vorgesehen sind, die in dem vorliegenden Fall der Versteifungsstrebe zur Aufnahme der Lagereinrichtungen der Plattform mit Füßen und Wägezellen dienen.

Die Fig. 7 zeigt die Versteifungsstrebe 80 im eingebauten Zustand in einer Plattform 100, wobei sich zwei Versteifungsstreben 80 parallel zueinander an den Längsseiten der Plattform 100 erstrecken, wobei zwischen den Versteifungsstreben 80 mehrere Auflageplatten 101 bis 104 nebeneinander angeordnet sind, wobei die Auflageplatten in den Schultern, die durch die Wandbereich 84 und 85 der Versteifungsstreben 80 gebildet sind (s. Fig. 6), gelagert sind.

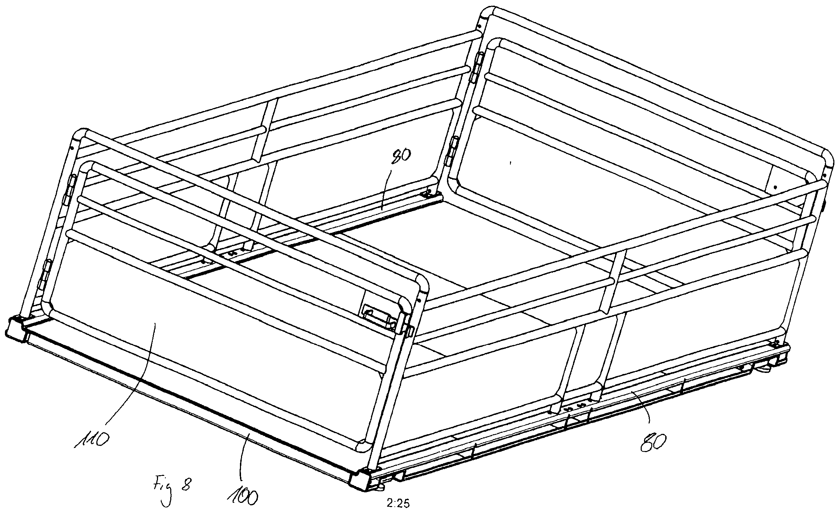

Die Fig. 8 zeigt die Plattform 100 in einer Plattformwaage, die als Viehwaage ausgebildet ist. Entsprechend sind auf der Plattform 100 insbesondere in entsprechenden Öffnungen in den randseitigen Versteifungsstreben 80 Aufbauten in Form von Gattern 110 zur Aufnahme der zu wiegenden Tiere vorgesehen.

Die Ausführungsform der Fig. 8 zeigt, dass die erfindungsgemäße Plattformwaage in großen Dimensionen herstellbar ist, wobei durch die Verwendung der Kantprofile als Versteifungsstreben eine hohe Steifigkeit, insbesondere Biegefestigkeit und Verwindungssteifigkeit erzielt werden kann, die ein präzises Messergebnis ermöglicht.

Durch den modulartigen Aufbau der erfindungsgemäßen Plattformwaage mit Versteifungsstreben in Form von Kantprofilen zur Bildung einer Rahmenkonstruktion sowie mit einer entsprechenden Auflageplatte, die mit der Rahmenkonstruktion verbunden wird, um eine Plattform zu bilden, die wiederum auf einer Lagereinrichtung mit entsprechenden Füßen, Wägezellen und dergleichen angeordnet ist, ist mit wenigen verschiedenen Bauteilen die Realisierung verschiedenster Plattformwaagen, insbesondere in verschiedensten Dimensionen und für verschiedenste Einsatzbereiche, also Wiegebereiche, möglich, da teilweise identische Komponenten verwendet werden können. Beispielsweise kann die Plattform 100 aus dem Ausführungsbeispiel der Figuren 7 und 8 durch Verwendung verlängerter Längsversteifungsstreben 80 in einfacher Weise in der Länge verlängert werden, da lediglich eine oder mehrere zusätzliche Auflageplatten angeordnet werden müssen. Zudem können quer angeordnete Versteifungsstreben, wie sie beispielsweise in den vorangegangenen Figuren 2 bis 5 dargestellt worden sind, zur Versteifung der Plattform 100 eingesetzt werden, sodass zur

Anpassung der unterschiedlichen Dimension lediglich die Längsversteifungsstreben 80 in unterschiedlichen Längen ausgebildet werden müssen.

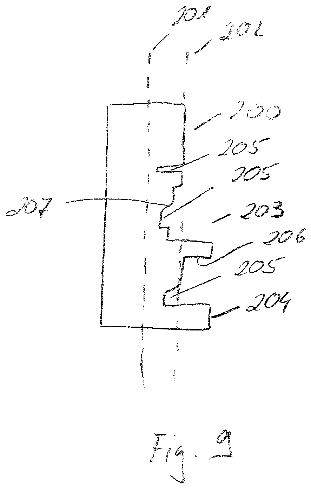

Die Fig. 9 zeigt eine Draufsicht auf ein Blech 200, wie es als Ausgangsblech für eine Versteifungsstrebe verwendet werden kann. Die gestrichelten Linien 201 und 202 zeigen die Kantlinien, entlang denen das Blech 200 gekantet wird, um beispielsweise im dargestellten Fall eine S- oder U-Form im Querschnitt des fertigen Kantprofils zu bilden.

Entlang der Seite 203 des Blechs 200, die im Wesentlichen parallel zu den Kantlinien 201 und 202 verläuft, weist die Randkante 204 eine Vielzahl von Ausnehmungen und Einschnitten 205 auf, wobei die Randkante 204 in diesen Bereichen quer zur Richtung der Kantlinien 201 und 202 verläuft. Beispielsweise verläuft die Randkante 204 im Bereich 206 senkrecht zur Kantlinie 202. Allerdings sind auch schräge Verläufe der Randkante 204 mit entsprechend parallelen Anteilen zu den Kantlinien 201 und 202 sowie nicht-parallelen Anteilen zu den Kantlinien 201 und 202 möglich, wie beispielsweise im Bereich 207 gezeigt. Dadurch lässt sich eine Versteifungsstrebe erzeugen, die ein individuelles, angepasstes Design der Versteifungsstrebe ermöglicht. Die Randkante 204 mit den Ausnehmungen und Einschnitten 205 kann in einfacher Weise durch Laserschneiden erzeugt werden.

Ähnlich wie die Versteifungsstreben können auch weitere Komponenten der Plattform, wie z.B. die Auflageplatten und/oder Lagereinrichtungen durch Laserschneiden und/oder Kanten hergestellt werden, beispielsweise eine Auflageplatte mit einer gekanteten Stirnseite, die eine in beliebiger Form geschnittene Randkante aufweist.

Obwohl die vorliegende Erfindung anhand der Ausführungsbeispiele ausführlich beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen von Merkmalen vorgenommen werden können, ohne dass der Schutzbereich der beigefügten Ansprüche verlassen wird.

## Patentansprüche

1. Plattformwaage mit einer Plattform (2, 100), die eine Aufnahmefläche zur Aufnahme des Wiegegutes aufweist, wobei die Längs- und Breitenerstreckung der Plattform ein Vielfaches der Dicke der Plattform beträgt und die Aufnahmefläche in einer Aufnahmeebene liegt, die durch die Längserstreckung und die Breitenerstreckung der Anfnahmefläche aufgespannt ist, und mit mindestens einer, vorzugsweise einer Vielzahl an Wägezellen (7, 8, 9, 10) zur Ermittlung des Gewichts des Wiegegutes, wobei die Plattform eine Rahmenkonstruktion (30) zur Versteifung der Plattform aufweist, und wobei die Rahmenkonstruktion mehrere parallel zur Aufnahmeebene und quer über die Aufnahmefläche oder entlang der Seite der Aufnahmefläche verlaufende Versteifungsstreben (31, 32, 33, 80) aufweist, wobei
eine Versteifungsstrebe ein Kantprofil ist, welches mehrere zueinander parallele Kantungen umfasst,
**dadurch gekennzeichnet, dass** mehrere der Versteifungsstreben (31, 32, 33) ein Kreuz bilden und die Versteifungsstreben (31, 32, 33) Ausnehmungen zum gegenseitigen Ineinandergreifen aufweisen.

2. Plattformwaage nach Anspruch 1,
**dadurch gekennzeichnet, dass**
eine der mehreren Versteifungsstreben mindestens eine Randkante aufweist, die zur Kantung parallele und nicht-parallele Abschnitte oder Abschnitte mit zur Kantung parallelen und nicht-parallelen Anteilen umfasst.

3. Plattformwaage nach Anspruch 1 oder 2,
**dadurch gekennzeichnet, dass** zusätzlich mehrere der Versteifungsstreben (31, 32, 33) parallel und beabstandet zueinander und/oder umlaufend um die Aufnahmefläche angeordnet sind.

4. Plattformwaage nach Anspruch 1 oder 2,
**dadurch gekennzeichnet, dass** mehrere der Versteifungsstreben (80) eine Schulter aufweisen, in welcher mindestens eine Auflageplatte angeordnet ist.

5. Plattformwaage nach einem der vorhergehenden Ansprüche,
**dadurch gekennzeichnet, dass**
die Plattformwaage Versteifungsstreben umfasst, die mindestens 4, insbesondere 5, vorzugsweise mindestens 6 Kantungen, insbesondere parallele Kantungen zueinander aufweisen.

6. Plattformwaage nach einem der vorhergehenden Ansprüche,
**dadurch gekennzeichnet, dass**
die Versteifungsstreben im Querschnitt mindestens eine Form aufweisen, die aus der Gruppe ausgewählt ist, die die Form eines Omegas, des Umfangs eines L, eines C und eines an einer Seite nicht vollständig geschlossenen Rechtecks umfasst.

7. Plattformwaage nach einem der vorhergehenden Ansprüche,
**dadurch gekennzeichnet, dass**
die Auflagefläche durch eine Auflageplatte (20) gebildet ist, die auf randseitig angeordneten. Versteifungsstreben angeordnet und/oder zur Bildung von Stirnseiten gekantet ist.

8. Plattformwaage nach einem der vorhergehenden Ansprüche,
**dadurch gekennzeichnet, dass**
eine Versteifungsstrebe zusätzlich Ausdehnung entlang einer Kantung aufweist, die länger als in einer, insbesondere jeder Richtung quer dazu ist, insbesondere ein Vielfaches davon aufweist, mindestens zweimal, vorzugsweise mindestens fünfmal länger als die Quererstreckung ist, und/oder eine Versteifungsstrebe einen Raum zumindest an zwei, vorzugsweise an drei Seiten begrenzt oder umschließt.

9. Verfahren zur Herstellung einer Plattformwaage nach einem der Ansprüche 1 bis 8, mit einer Plattform, die eine Aufnahmefläche zur Aufnahme des Wiegegutes aufweist, wobei die Längs- und Breitenerstreckung der Plattform (2, 100) so ausgewählt wird, dass sie ein Vielfaches der Dicke der Plattform betragen und die Aufnahmefläche in einer Aufnahmeebene angeordnet wird, die durch die Längserstreckung und die Breitenerstreckung der Aufnahmefläche aufgespannt ist, und wobei mindestens eine, vorzugsweise eine Vielzahl von Wägezellen (7, 8, 9, 10) zur Ermittlung des Gewichts des Wiegegutes an der Plattform angeordnet werden, und wobei an der Plattform eine Rahmenkonstruktion (30) zur Versteifung der Plattform angeordnet wird, und wobei die Rahmenkonstruktion so ausgebildet wird, dass mehrere parallel zur Aufnahmeebene und quer über die Aufnahmefläche oder entlang der Seite der Aufnahmefläche verlaufende Versteifungsstreben angeordnet werden, wobei
die Versteifungsstreben als ein Kantprofil ausgebildet sind, welches durch mehrere zueinander parallele Kantungen eines Blechs und /oder durch mindestens eine Kantung eines Blechs, das abweichend von einer rechteckigen Form zugeschnitten ist, hergestellt wird,
**dadurch gekennzeichnet, dass** mehrere der Versteifungsstreben so angeordnet werden, dass sie ein Kreuz bilden, und die Versteifungsstreben Ausnehmungen zum gegenseitigen Ineinandergreifen aufweisen.

10. Verfahren nach Anspruch 9,
**dadurch gekennzeichnet, dass**
Ausnehmungen und/oder Öffnungen und/oder Schnitte in die Plattform, insbesondere in die Versteifungsstreben, mittels Laserschneiden eingebracht werden.

11. Verfahren nach Anspruch 9 oder 10,
**dadurch gekennzeichnet, dass**
Komponenten der Plattform, insbesondere die Rahmenkonstruktion mit einer die Auflagefläche bildenden Auflageplatte und/oder die Versteifungsstreben untereinander, mittels Schweißen, insbesondere Punktschweißen, verbunden werden.

12. Verfahren nach einem der Ansprüche 9 bis 11,
**dadurch gekennzeichnet, dass**
unterschiedliche Plattformwaagen mit insbesondere unterschiedlichen Abmessungen aus zumindest teilweise identischen Komponenten zusammengebaut werden, insbesondere aus identischen Komponenten in Form von Wägezellen, Versteifungsstreben und Lagereinrichtungen.

13. Baukastensystem zur Herstellung einer Plattformwaage nach einem der Ansprüche 1 bis 8, **dadurch gekennzeichnet, dass**
das Baukastensystem mehrere Versteifungsstreben umfasst, wobei die Versteifungsstreben so ausgebildet sind, dass sie zur Bildung einer Plattform kombiniert werden können.

14. Baukastensystem nach Anspruch 13,
**dadurch gekennzeichnet, dass**
sich die Versteifungsstreben in der Form und/oder in ihren Dimensionen unterscheiden.

15. Baukastensystem nach Anspruch 13 oder 14,
**dadurch gekennzeichnet, dass**
gleiche und/oder unterschiedliche Versteifungsstreben miteinander kombinierbar sind.

## Claims

1. Platform weighing scale with a platform (2, 100), which has a receiving surface for receiving the goods to be weighed, wherein the length and the breadth of the platform are a multiple of the thickness of the platform and the receiving surface lies in a receiving plane which is spanned by the length and the breadth of the receiving surface, and has at least one, preferably several load cells (7, 8, 9, 10) for determining the weight of the goods to be weighed, wherein the platform has a frame structure (30) for stiffening the platform, and wherein the frame structure has several reinforcing struts (31, 32, 33, 80) running parallel with the receiving plane and transverse across the receiving surface or along the side of the receiving surface, wherein a reinforcing strut is an edge profile comprising several folded edges parallel with each other,
**characterised in that**
several of the reinforcing struts (31, 32, 33) form a cross
and the reinforcing struts (31, 32, 33) have recesses for mutual engagement.

2. Platform weighing scale according to claim 1,
**characterised in that**
one of the several reinforcing struts has at least one boundary edge that comprises sections which are parallel and non-parallel with the folded edge or sections having portions which are parallel and non-parallel with the folded edge.

3. Platform weighing scale according to claim 1 or 2,
**characterised in that**
in addition several of the reinforcing struts (31, 32, 33) are disposed parallel with and spaced apart from one another and/or around the circumference of the receiving surface.

4. Platform weighing scale according to claim 1 or 2,
**characterised in that**
several of the reinforcing struts (80) have a shoulder in which at least one support plate is disposed.

5. Platform weighing scale according to any of the previous claims,
**characterised in that**
the platform weighing scale comprises reinforcing struts which have at least 4, especially 5, preferably at least 6 folded edges, especially folded edges that are parallel with one another.

6. Platform weighing scale according to any of the previous claims,
**characterised in that**
the cross-section of the reinforcing struts has at least one shape selected from the group comprising the shape of an omega, the circumference of an L, a C, and a rectangle not fully closed on one side.

7. Platform weighing scale according to any of the previous claims,
**characterised in that**
the support surface is formed by a support plate (20) which is disposed on reinforcing struts disposed at the boundary edges and/or which is folded to form end faces.

8. Platform weighing scale according to any of the previous claims,
**characterised in that**
a reinforcing strut additionally has an extension along a folded edge, said extension being longer than in one direction, especially in every direction transverse thereto, especially being a multiple thereof, is at least twice, preferably at least five times as long as the transverse extension, and/or a reinforcing strut bounds or encloses a space on at least two, preferably three sides.

9. Method for producing a platform weighing scale according to any of claims 1 to 8, having a platform which has a receiving surface for receiving the goods to be weighed, wherein the length and the breadth of the platform (2, 100) are chosen such that they are a multiple of the thickness of the platform, and the receiving surface is disposed in a receiving plane, which is spanned by the length and breadth of the receiving surface, and wherein at least one, preferably a plurality of load cells (7, 8, 9, 10) for determining the weight of the goods to be weighed are disposed at the platform, and wherein a frame structure (30) for stiffening the platform is disposed at the platform, and wherein the frame structure is designed in such a way that several reinforcing struts are disposed parallel with the receiving plane and transverse over the receiving surface or along the side of the receiving surface, wherein the reinforcing struts are in the form of an edge profile which is produced by several mutually parallel folded edges of sheet metal and/or by at least one folded edge of sheet metal which is cut to size in a shape not corresponding to a rectangle,
**characterised in that**
several of the reinforcing struts are disposed such that they form a cross, and the reinforcing struts have recesses for mutual engagement.

10. Method according to claim 9,
**characterised in that**
recesses and/or openings and/or cuts are made in the platform, especially in the reinforcing struts, by means of laser cutting.

11. Method according to claim 9 or 10,
**characterised in that**
components of the platform, especially the frame structure, are connected to a support plate forming the support surface and/or the reinforcing struts are connected to each other by means of welding, especially spot welding-

12. Method according to any of claims 9 to 11,
**characterised in that**
different platform weighing scales, especially of different dimensions, are assembled from at least partially identical components, especially from identical components in the form of load cells, reinforcing struts and bearing devices.

13. Modular system for the manufacture of a platform weighing scale according to any of claims 1 to 8,
**characterised in that**
the modular system comprises several reinforcing struts, wherein the reinforcing struts are configured such that they can be combined to form a platform.

14. Modular system according to claim 13,
**characterised in that**
the reinforcing struts differ in their shape and/or dimensions.

15. Modular system according to claim 13 or 14,
**characterised in that**
the same and/or different reinforcing struts can be combined with each other.

## Revendications

1. Balance à plateforme comprenant une plateforme (2, 100) qui présente une surface réceptrice pour recevoir la marchandise à peser, dans laquelle l'extension en longueur et en largeur de la plateforme atteint un multiple de l'épaisseur de la plateforme et la surface réceptrice se situe dans un plan récepteur qui est délimité par l'extension en longueur et l'extension en largeur de la surface réceptrice et avec au moins une, de préférence une pluralité de cellules de pesée (7, 8, 9, 10) pour déterminer le poids de la marchandise à peser, dans laquelle la plateforme présente une structure de châssis (30) pour renforcer la plateforme et dans laquelle la structure de châssis présente plusieurs entretoises de renfort (31, 32, 33, 80) s'étendant parallèlement au plan récepteur et transversalement sur la surface réceptrice ou le long de la face de la surface réceptrice, dans laquelle une entretoise de renfort est un profil d'arête qui comprend plusieurs rebords parallèles l'un à l'autre,
**caractérisée en ce que**
plusieurs des entretoises de renfort (31, 32, 33) forment une croix et les entretoises de renfort (31, 32, 33) présentent des évidements qui s'interpénètrent l'un dans l'autre.

2. Balance à plateforme selon la revendication 1,
**caractérisée en ce que**
l'une des multiples entretoises de renfort présentent au moins une arête de bord qui comprend des sections parallèles et non parallèles au rebord ou des sections avec des fractions parallèles et non parallèles au rebord.

3. Balance à plateforme selon la revendication 1 ou 2,
**caractérisée en ce que,**
en outre, plusieurs des entretoises de renfort (31, 32, 33) sont agencées parallèlement et à distance l'une de l'autre et/ou sur la périphérie autour de la surface réceptrice.

4. Balance à plateforme selon la revendication 1 ou 2,
**caractérisée en ce que**
plusieurs des entretoises de renfort (80) présentent un épaulement dans lequel est agencé au moins une plaque d'appui.

5. Balance à plateforme selon l'une quelconque des revendications précédentes,
**caractérisée en ce que**
la balance à plateforme comprend des entretoises de renfort qui présentent au moins 4, en particulier 5, de préférence au moins 6 rebords, en particulier des rebords parallèles l'un à l'autre.

6. Balance à plateforme selon l'une quelconque des revendications précédentes,
**caractérisée en ce que**
les entretoises de renfort présentent en section transversale au moins une forme qui est choisie dans le groupe qui comprend la forme d'un oméga, de la périphérie d'un L, d'un C et d'un rectangle qui n'est pas totalement fermé sur un côté.

7. Balance à plateforme selon l'une quelconque des revendications précédentes,
**caractérisée en ce que**
la surface réceptrice est formée par une plaque d'appui (20) qui est agencée sur des entretoises de renfort aménagées côté bord et/ou est repliée pour former des côtés frontaux.

8. Balance à plateforme selon l'une quelconque des revendications précédentes,
**caractérisée en ce que**
une entretoise de renfort présente en outre un évidement le long d'un rebord qui est plus long que dans une direction, en particulier dans chaque direction qui lui est transversale, en particulier d'un multiple de celle-ci, est au moins deux fois, de préférence au moins cinq fois plus long que l'extension transversale et/ou une entretoise de renfort délimite ou confine un espace au moins sur deux côtés, de préférence sur trois côtés.

9. Procédé de fabrication d'une balance à plateforme selon l'une quelconque des revendications 1 à 8, avec une plateforme qui présente une surface réceptrice pour recevoir la marchandise à peser, dans lequel l'extension en longueur et en largeur de la plateforme (2, 100) est choisie en sorte qu'elle atteigne un multiple de l'épaisseur de la plateforme et la surface réceptrice est agencée dans un plan récepteur qui est délimité par l'extension en longueur et l'extension en largeur de la surface réceptrice, et dans lequel au moins l'une, de préférence une pluralité de cellules de pesée (7, 8, 9, 10) est ou sont agencées sur la plateforme pour déterminer le poids de la marchandise à peser, et dans lequel est agencée sur la plateforme une structure de châssis (30) pour renforcer la plateforme, et dans lequel la structure de châssis est formée de manière que plusieurs entretoises de renfort s'étendant parallèlement au plan récepteur et transversalement soient agencées sur la surface réceptrice ou le long du côté de la surface réceptrice, dans lequel les entretoises de renfort se présentent sous la forme d'un profil d'arête, qui est formé par plusieurs rebords mutuellement parallèles d'une tôle et/ou par au moins un rebord d'une tôle qui est découpée différemment d'une forme rectangulaire,
**caractérisé en ce que**
plusieurs des entretoises de renfort sont agencées de sorte qu'elles forment une croix et les entretoises de renfort présentent des évidements de manière à s'interpénétrer l'une dans l'autre.

10. Procédé selon la revendication 9,
**caractérisée en ce que**
les évidements et/ou les ouvertures et/ou les découpes dans la plateforme sont ménagées, en particulier dans les entretoises de renfort, par découpe au laser.

11. Procédé selon la revendication 9 ou 10,
**caractérisé en ce que**
des composants de la plateforme, en particulier la structure de châssis, sont reliées conjointement à une plaque d'appui formant la surface d'appui et/ou aux entretoises de renfort par soudage, en particulier par soudage par points,

12. Procédé selon l'une quelconque des revendications 9 à 11,
**caractérisé en ce que**
différentes balances à plateforme avec en particulier des dimensions différentes sont conçues à partir de composants au moins en partie identiques, en particulier à partir de composants identiques sous la forme de cellules de pesée, d'entretoises de renfort et de dispositifs de support.

13. Système de construction pour la fabrication d'une balance à plateforme selon l'une quelconque des revendications 1 à 8,
**caractérisé en ce que**
le système de construction comprend plusieurs entretoises de renfort, dans lequel les entretoises de renfort sont conçues de manière à pouvoir être combinées pour former une plateforme.

14. Système de construction selon la revendication 13,
**caractérisé en ce que**
les entretoises de renfort se distinguent par la forme et/ou par leurs dimensions.

15. Système de construction selon la revendication 13 ou 14,
**caractérisé en ce que**
des entretoises de renfort similaires et/ou différentes peuvent être combinées l'une avec l'autre.
